# EUROPÄISCHE PATENTSCHRIFT

(11) **EP 0 470 119 B1**
(45) Veröffentlichungstag und Bekanntmachung des Hinweises auf die Patenterteilung: **03.02.1993**
(21) Anmeldenummer: 90906223.4
(22) Anmeldetag: 26.04.1990
(51) Int. Cl.: B32B 27/18, B32B 27/04

(54) **DEKORATIVE SCHICHTPRESSSTOFFPLATTE**
DECORATIVE LAMINATED SHEET
PLAQUE STRATIFIEE DECORATIVE

(30) Priorität: 28.04.1989 DE 8905408 U
(43) Veröffentlichungstag der Anmeldung: 12.02.1992
(73) Patentinhaber: RESOPAL GMBH, D-64823 Gross-Umstadt (DE)
(72) Erfinder: SCHIKARSKI, Horst, J., D-6940 Weinheim (DE)
(74) Vertreter: Katscher, Helmut, Dipl.-Ing.
(86) Internationale Anmeldenummer: EP9000672
(87) Internationale Veröffentlichungsnummer: WO9013424

(56) Entgegenhaltungen:
- DE-A- 1 569 995
- DE-A- 1 961 590
- GB-A- 1 069 203

## Beschreibung

Die Erfindung betrifft eine dekorative Schichtpreßstoffplatte, bestehend aus einem Kern, der von mehreren mit Phenolharz getränkten Kernpapierbahnen gebildet wird, und einer Deckschicht, die von einer mit Melaminharz getränkten Dekorpapierbahn gebildet wird.

Dekorative Schichtpreßstoffplatten (HPL) nach DIN 16 921 weisen einen Kern auf, der üblicherweise aus mit Phenolharz getränkten, ungebleichten Natron-Kraftpapierbögen besteht, die die Kernpapierbahnen bilden. Die Dekorpapierbahn der Deckschicht ist mit Melaminharz bezw. Aminoplastharzen geträntit. Bei der Herstellung wird der aus diesen Papierbahnen bestehende Stapel unter Hitzeeinwirkung zu der Schichtpreßstoffplatte verpreßt (DE-A-1 569 995, GB-A-1 obg 203).

Nach dem Verpressen und Aushärten erscheinen die Melaminharze der pigmentierten oder unpigmentierten Dekorpapierbahn transparent bzw. farblos. Der Kern der Schichtpreßstoffplatte zeigt jedoch eine braune bis braunschwarze Färbung, die hauptsächlich durch die Eigenfarbe des ungebleichten Kraftpapiers der Kernpapierbahnen verursacht wird, die durch die gelbliche Färbung des Phenolharzes noch verstärkt wird. Dadurch ergibt sich das typische Erscheinungsbild einer dekorativen Schichtpreßstoffplatte: Während die Oberfläche die Farbe der Dekorpapierbahn zeigt, tritt an der Schnittkante eine dunke Linie auf, der besonders auffällig ist, wenn die Oberfläche der Deckschicht hell oder weiß ist.

Bei manchen Anwendungsgebieten im Möbelbau wird diese dunkle Linie an der Schnittkante der Strichpreßstoffplatte ästhetisch als störend empfunden. In vielen Anwendungsfällen werden Schichtpreßstoffplatten als Deckplatten auf Kernplatten beispielsweise Spanplatten, aufgeklebt, um Möbelw'ände, Tischplatten, Arbeitsplatten und dgl. zu bilden. An der Plattenkante liegt dann die die dunkle Linie aufweisende Schnittkiante frei. Diese dunkle Linie ist zum einen störend; zum anderen führt insbesondere bei hoher Wärmeeinstrahlung, beispielsweise bei Sonneneinstrahlung, die dunkle Färbung des Kerns im Schnittbereich zu einer höheren Erwärmung als in der hellen oder weißen Dekorpapierbahn, was wiederum zu unterschiedlichen Wärmedehnungen führt. Diese an sich geringen Unterschiede der Wärmedehnungen können jedoch das Ablösen der Kante der Schichtpreßstoffplatte von der darunterliegenden Fläche begünstigen.

Es ist zwar bekannt, eine Schichtpreßstoffplatte mit einem auch in der Schnittfläche weißen Kern auszuführen. Hierbei sind die den Kern bildenden Kernpapierbahnen aber mit weißem Melaminharz getränkt. Diese Schichtpreßstoffplatten sind nicht für das sog. Postforming-Verfahren geeignet, bei dem eine nachträgliche Verformung der bereits ausgehärteten Schichtpreßstoffplatte erfolgt, um beispielsweise abgerundete Möbelteile zu bilden.

Aufgabe der Erfindung ist es daher, eine Schichtpreßstoffplatte der eingangs genannten Gattung unter Beibehaltung der Eignung für das Postforming-Verfahren so auszubilden, daß eine dunkle Linie an der Schnittkante vermieden wird, ohne daß hierfür eine gesonderte Maßnahme zur Abdeckung ergriffen werden müßte.

Diese Aufgabe wird erfindungsgemäß dadurch gelöst, daß die Kernpapierbahnen des Kerns aus gebleichtem, mit anorganischen Weißpigmenten eingefärbtem Kernpapier bestehen.

Der an der Schnittkante sichtbare Kern der Schichtpreßstoffplatte ist hierbei ebenso hell bzw. weiß wie die Oberfläche der Dekorpapierbahn. Er fällt deshalb nicht störend auf und hat auch dieselbe, geringe Wärmedehnung wie die Deckschicht. Die Schichtpreßstoffplatte kann im Postforming-Verfahren nachträglich verformt werden, beispielsweise zur Bildung einer abgerundeten Kante an einer Arbeitsplatte.

Gemäß einer bevorzugten Ausführungsform des Erfindungsgedankens ist vorgesehen, daß das Phenolharz der Kernpapierbahn ein Lichtschutzmittel enthält. Dadurch wird einer nachträglichen Dunkelfärbung unter Lichteinfluß weitestgehend vorgebeugt.

Nachfolgend wird ein Ausführungsbeispiel der Erfindung näher erläutert, das in der Zeichnung dargestellt ist. Es zeigt:
Fig. 1 einen Querschnitt durch eine Arbeitsplatte oder ein anderes Möbelteil und
Fig. 2 einen Querschnitt durch eine im Postforming-Verfahren hergestellte Arbeitsplatte mit abgerundeter Kante.

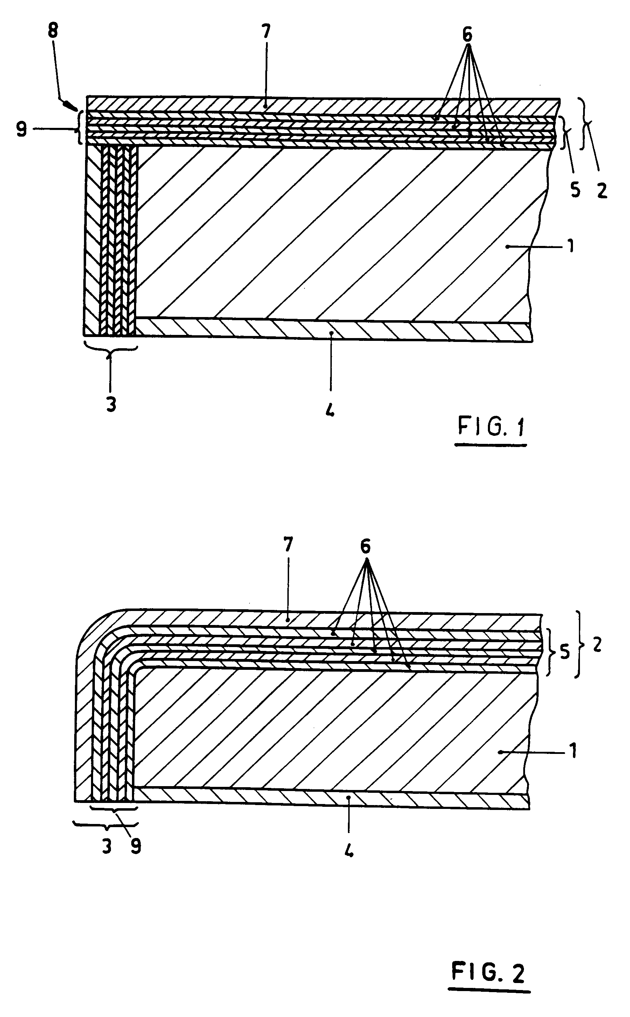

Auf eine Kernplatte 1, die beispielsweise eine Holzspanplatte ist, ist gemäß Fig. 1 eine dekorative Schichtpreßstoffplatte 2 aufgeleimt. Die Vorderkante der Kernplatte trägt ebenfalls einen aufgeleimten Streifen 3 aus einer dekorativen Schichtpreßstoffplatte, die in gleicher Weise aufgebaut ist wie die Schichtpreßstoffplatte 2. An der Unterseite der Kernplatte 2 ist eine nur schematisch angedeutete untere Deckplatte 4 angeklebt.

Die Schichtpreßstoffplatte 2 besteht aus einem Kern 5, aus mehreren Kernpapierbahnen 6, die mit Phenolharz getränkt sind. An der Oberseite der Schichtpreßstoffplatte 2 befindet sich eine Deckschicht 7, die aus einer beispielsweise weiß pigmentierten Dekorpapierbahn besteht, die mit Melaminharz getränkt ist. Die Kernpapierbahnen 6 und die Dekorpapierbahn 7 sind miteinander unter Hitzeeinwirkung verpreßt und ausgehärtet, um die dekorative Schichtpreßstoffplatte 2 zu bilden.

Die Kernpapierbahnen 6 des Kerns 5 bestehen aus gebleichtem Kernpapier, das mit anorganischen Weißpigmenten eingefärbt ist. Das Phenolharz, mit dem die Kernpapierbahnen 6 getränkt sind, ist durch Zusatz von Lichtschutzmitteln modifiziert. Bei dem dargestellten Ausführungsbeispiel wird für die Kernpapierbahnen 6 ein Spezialpapier mit etwa 140 g/cm² Flächengewicht eingesetzt.

An der Schnittkante 8 der Schichtpreßstoffplatte 2 liegt der Kern 5 in einem Streifen 9 frei. Dieser Streifen 9 ist ebenso hell bzw. weiß wie die Deckschicht 7 der Schichtpreßstoffplatte 2 und wie die Oberfläche des Kantenstreifens 3.

Die in Fig. 2 dargestellte Arbeitsplatte ist im Postforming-Verfahren hergestellt. Die Schichtpreßstoffplatte 2 ist nach ihrer Herstellung zur Bildung einer abgerundeten Kante verformt worden. Gleiche Teile sind mit gleichen Bezugszeichen wie in Fig. 1 bezeichnet.

## Patentansprüche

1. Dekorative Schichtpreßstoffplatte, bestehend aus einem Kern (5), der von mehreren mit Phenolharz getränkten Kernpapierbahnen (6) gebildet wird, und einer Deckschicht (7), die von einer mit Melaminharz getränkten Dekorpapierbahn gebildet wird, dadurch gekennzeichnet, daß die Kernpapierbahnen (6) des Kerns (5) aus gebleichtem, mit anorganischen Weißpigmenten gefärbtem Kernpapier bestehen.

2. Dekorative Schichtpreßstoffplatte nach Anspruch 1, dadurch gekennzeichnet, daß das Phenolharz der Kernpapierbahnen (6) ein Lichtschutzmittel enthält.

## Claims

1. Decorative laminated panel, consisting of a core (5), which is formed by a plurality of core paper webs (6) impregnated with phenolic resin, and a surface coat (7), which is formed by a decorative paper web impregnated with melamine resin, characterised in that the core paper webs (6) of the core (5) consist of bleached core paper coloured with inorganic white pigments.

2. Decorative laminated panel according to Claim 1, characterised in that the phenolic resin of the core paper webs (6) contains an anti-fading agent.

## Revendications

1. Plaque stratifiée décorative constituée d'une âme (5) qui est formée de plusieurs bandes de papier intermédiaires (6) imbibées de résine phénolique, et d'une couche de recouvrement (7), qui est formée d'une bande de papier décor imbibée de résine mélamine, caractérisée en ce que les bandes de papier intermédiaires (6) de l'âme (5) sont constituées de papier blanchi coloré par des pigments blancs minéraux.

2. Plaque stratifiée décorative selon la revendication 1, caractérisée en ce que la résine phénolique des bandes de papier intermédiaires (6) contient un agent photoprotecteur.
